# FASCICULE DE BREVET EUROPEEN

(11) **EP 1 912 920 B1**
(45) Date de publication et mention de la délivrance du brevet: **10.06.2009**
(21) Numéro de dépôt: 06778780.4
(22) Date de dépôt: 05.07.2006
(51) Int. Cl.: C04B 41/49, C09D 183/04, B27K 3/15

(54) **PROCEDE POUR HYDROFUGER ET AMELIORER L'EFFET PERLANT DE MATERIAUX DE CONSTRUCTION**
VERFAHREN ZUR HYDROPHOBIERUNG UND VERBESSERUNG DES ABPERLEFFEKTS VON BAUMATERIALIEN
METHOD FOR HYDROPHOBISING AND IMPROVING THE WATER REJECTION EFFECT OF CONSTRUCTION MATERIALS

(30) Priorité: 29.07.2005 FR 0508110
(43) Date de publication de la demande: 23.04.2008
(73) Titulaire: Bluestar Silicones France, 69486 Lyon Cedex 03 (FR)
(72) Inventeur: GIRAUD, Yves, F-69110 Sainte Foy Les Lyon (FR); DERUELLE, Martial, F-69390 Millery (FR); CHAUFFRIAT, Henri, F-69005 Lyon (FR); MILLOT, Sandrine, F-69230 Saint Genis Laval (FR); MAGGIONI, Jair, 13140-000 Paulinia (BR)
(86) Numéro de dépôt international: PCT/FR2006/001600
(87) Numéro de publication internationale: WO 2007/012716

(56) Documents cités:
- WO-A-00/44687
- FR-A- 2 865 223

## Description

Le domaine de l'invention est celui de l'hydrofugation des matériaux de construction poreux (notamment minéraux ou [ligno]céllulosiques), donc sensibles à l'humidité. En général, l'hydrofugation est réalisée sur les éléments en matériaux de construction une fois assemblés pour former des parties de bâtiments (voir par exemple WO 00/44 687 A).

L'hydrofugation est un traitement de surface destiné à limiter la pénétration de l'eau, par application d'un produit qui modifie la tension superficielle du matériau traité. On exige d'un traitement d'hydrofugation qu'il :
- réduise la prise d'eau par capillarité (réduction du coefficient d'absorption d'eau >90%) ;
- affecte peu la perméabilité à la vapeur d'eau (variation du coefficient de perméabilité <20%) ;et
- ne change pas l'aspect du matériau traité (couleur, brillance, rugosité)

Les hydrofuges de surface sont des produits incolores permettant d'imperméabiliser la couche superficielle du matériau de construction poreux, sans en modifier sensiblement l'aspect ou la perméabilité à la vapeur d'eau. Par exemple, lorsque le matériau de construction poreux est du béton, il est souhaitable que les pores et capillaires du béton soient revêtus à l'intérieur, mais non remplis. Il n'y a pas de formation de film en surface.

Cette hydrofugation est destinée notamment à mieux protéger le matériau contre la pénétration d'eau, provenant le plus souvent de la pluie battante ou de remontées d'eau du sol. Il est bien connu d'hydrofuger des matériaux de construction, soit pendant leur fabrication, soit après leur pose, à l'aide d'agents hydrofuges qui, dans le cas de matériaux tels que les pierres, le plâtre ou la brique, sont le plus généralement des composition à base de silicones.

L'hydrofugation à l'aide de l'agent hydrofuge préalablement dissous ou dispersé dans un solvant ou un liquide convenable, aqueux ou non, peut être faite effectivement en surface, auquel cas on badigeonne ou on asperge la surface du matériau à l'aide de l'agent hydrofuge, ou bien être faite en profondeur et, dans ce cas, on introduit l'agent hydrofuge dans la masse, ce qui est possible par exemple pour les briques, le bois, le béton, le plâtre ou les pierres reconstituées.

Dans le cas de pierres naturelles ou de matériaux in situ formant par exemple des murs existants, on peut faire un traitement de surface ou injecter l'agent hydrofuge dans la masse par forçage sous pression à l'aide d'une canule introduite dans un trou d'injection convenablement pratiqué dans le matériau; on peut encore infiltrer l'agent hydrofuge ou le faire pénétrer par imbibition et diffusion par capillarité dans le matériau.

Les compositions silicone liquides d'hydrofugation existent soit sous forme de solutions dans des solvants organiques tels que le "white spirit" ou l'heptane, soit sous forme d'émulsions aqueuses apparues plus récemment sur le marché. Classiquement, après l'imprégnation, la phase solvant organique ou la phase aqueuse de ces compositions se volatilise et la matière active silicone demeure dans la masse et à la périphérie du matériau de construction poreux, de manière à former une barrière contre l'humidité.

Pour qu'une hydrofugation à l'aide d'une composition silicone liquide soit réussie, il importe :
- que la rhéologie de cette dernière permette une pénétration dans le matériau de construction poreux sur une épaisseur allant de plusieurs millimètres à plusieurs centimètres,
- que se produise une réaction entre le matériau de construction poreux et la matière silicique active d'hydrofugation,
- et que de préférence, cette matière silicique active réticule dans le matériau de construction poreux, cette réticulation pouvant être la réaction qui va générer la création de liaisons entre le matériau de construction poreux et la matière silicique d'hydrofugation.

Cependant, une des difficultés rencontrées dans la formulation de composition liquide hydrofugeante est la recherche d'un effet perlant satisfaisant. L'effet perlant est une propriété importante pour l'application car directement perçue par l'utilisateur final. Elle caractérise l'aspect visuel du support une fois par exemple que ce dernier ait été mouillé par une pluie. Moins il y a d'eau qui reste accrochée à la surface, meilleur est l'effet perlant.

Les traitements d'hydrofugation auxquels on s'intéresse dans le cadre de l'invention sont ceux réalisés à l'aide de compositions silicone liquides, comprenant des résines polyorganosiloxanes. Les matériaux de construction poreux considérés peuvent être par exemple des pierres à base de carbonate de calcium et/ou de silice et/ou d'alumino-silicates, des bétons, des mortiers, des plâtres, des terres cuites (briques, tuiles, etc...), des bois ou d'autres matériaux de construction similaires présentant une certaine porosité ou un état de surface permettant la mise en oeuvre d'un agent hydrofuge.

Par bois, on entend les bois utilisés notamment dans des constructions existantes, anciennes ou récentes, telles que des boiseries extérieures et intérieures, des poutres, des colombages, des charpentes. Le bois est, on le sait, un matériau poreux qui absorbe fortement l'eau.

Ainsi, un objectif de la présente invention est de mettre au point une composition silicone liquide ne présentant plus les inconvénients mentionnés ci-dessus.

Pour atteindre cet objectif, les inventeurs ont eu le mérite de mettre en évidence, de manière tout à fait surprenante et inattendue, qu'une composition hydrofugeante à base de résine silicone et dans des teneurs judicieusement choisies de chacun des constituants d'un mélange de catalyseur contenant au moins un alcoxyde métallique et un réticulant choisi de préférence parmi les silicates permet d'obtenir des compositions présentant, outre des propriétés d'hydrofugation intéressantes, un effet perlant remarquable.

En particulier, l'invention concerne l'utilisation de compositions silicones liquides d'hydrofugation, destinées à imprégner des matériaux poreux de construction, par exemple minéraux ou (ligno)cellulosiques.

Sont également visés par l'invention un procédé d'hydrofugation de matériaux de construction poreux de préférence minéraux ou (ligno)cellulosiques, à l'aide de la susdite composition silicone liquide.

Ces objectifs parmi d'autres sont atteints par la présente invention qui a pour premier objet l'utilisation pour hydrofuger et améliorer l'effet perlant d'un matériau de construction poreux d'une composition liquide silicone constituée essentiellement de :
a) au moins une résine polyorganosiloxane **A** présentant, par molécule, d'une part au moins deux motifs siloxyles différents choisis parmi ceux de types M, D, T, Q, l'un des motifs étant un motif T ou un motif Q et d'autre part au moins trois groupements hydrolysables/condensables de types OH et/ou OR¹ où R¹ est un radical alkyle linéaire ou ramifié en C₁ à C₆ ;
b) au moins un alkoxyde métallique **B** où le métal M peut éventuellement être partiellement relié à un ou plusieurs ligands, en teneur ≥ 5% poids, de préférence ≥ à 6% en poids et encore plus préférentiellement ≥ à 7% en poids par rapport à la résine polyorganosiloxane **A**, ledit alcoxyde métallique ayant pour formule générale :

   M[(OCH₂CH₂)ₐOR²]ₙ **(I)**

   dans laquelle :
   - M est un métal choisi dans le groupe formé par : Ti, Zr, Ge, Mn et Al ;
   - n = valence de M ;
   - les substituants R², identiques ou différents, représentent chacun un radical alkyle, linéaire ou ramifié, en C₁ à C₁₂;
   - a représente zéro, 1 ou 2 ;
   - avec les conditions selon lesquelles, quand le symbole a représente zéro, le radical alkyle R² possède de 2 à 12 atomes de carbone, et quand le symbole a représente 1 ou 2, le radical alkyle R² possède de 1 à 4 atomes de carbone ; et
c) au moins un réticulant **C**, en teneur ≥ 4% en poids, de préférence ≥ à 5% en poids et encore plus préférentiellement ≥ à 6 % en poids par rapport à la résine polyorganosiloxane **A**, ledit réticulant **C** ayant pour formule

   Si[(OCH₂CH₂)ₐ-OR]₄ **(II)**
dans laquelle :
les substituants R, identiques ou différents, représentent chacun un radical alkyle, linéaire ou ramifié, en C₁ à C₁₂, et
   - a représente zéro, 1 ou 2.

Selon un autre mode de réalisation la composition selon l'invention contient en outre un solvant organique utilisable pour l'hydrofugation de matériaux de construction. Comme exemple de solvant on peut citer à titre non limitatif des solvants organiques tels que le "white spirit" ou l'heptane.

Les constituants **A** utilisables, séparément ou en mélange, sont des résines silicones classiques parmi lesquelles on peut citer les résines organosiliciques préparées par cohydrolyse et cocondensation de chlorosilanes choisis dans le groupe constitué de ceux de formules (R³)₃SiCl, (R³)₂Si(Cl)₂, R³Si(Cl)₃ et Si(Cl)₄. Ces résines sont des oligomères ou polymères organopolysiloxanes ramifiés bien connus et disponibles dans le commerce. Elles présentent, dans leur structure, au moins deux motifs siloxyles différents choisis parmi ceux de formule (R ³)₃SiO_{0,5} (motif M), (R ³)₂SiO (motif D), R³SiO_{1,5} (motif T) et SiO₂ (motif Q), l'un au moins de ces motifs étant un motif T ou Q. Les radicaux R³ sont répartis de telle sorte que les résines comportent environ 0,8 à 1,8 radicaux R³ par atome de silicium. De plus, ces résines ne sont pas complètement condensées et elles possèdent encore environ 0,001 à 1,5 groupes OH et/ou alkoxyle OR¹ par atome de silicium ;

Les radicaux R³ sont identiques ou différents et sont choisis parmi les radicaux alkyles linéaires ou ramifiés en C1 - C6, les radicaux alcényles en C2 - C4, phényle, trifluoro-3,3,3 propyle. On peut citer par exemple comme radicaux R³ alkyles, les radicaux méthyle, éthyle, isopropyle, tertiobutyle et n-hexyle .

Comme exemples d'oligomères ou de polymères organopolysiloxanes ramifiés on peut citer les résines MQ, les résines MDQ, les résines TD et les résines MDT, les groupes OH et/ou OR¹ pouvant être portées par les motifs M, D et/ou T, la teneur pondérale en groupes OH et/ou OR¹ étant comprise entre 0,2 et 10 % en poids.

En ce qui concerne les constituants **B**, on peut mentionner, à titre d'exemples de symboles R² dans les dérivés organiques du métal M de formule **(I),** les radicaux : méthyle, éthyle, propyle, isopropyle, butyle, isobutyle, hexyle, éthyl-2 hexyle, octyle, décyle et dodécyle.

Comme exemples concrets de constituants **B** qui sont préférés, peuvent être cités : les titanates d'alkyles comme le titanate d'éthyle, le titanate de propyle, le titanate d'isopropyle, le titanate de butyle, le titanate d'éthyl-2 hexyle, le titanate d'octyle, le titanate de décyle, le titanate de dodécyle, le titanate de β-méthoxyéthyle, le titanate de β-éthoxyéthyle, le titanate de β-propoxyéthyle, le titanate de formule Ti[(OCH₂CH₂)₂-OCH₃]₄ ; les zirconates d'alkyles comme le zirconate de propyle, le zirconate de butyle ; et des mélanges de ces produits. ils peuvent aussi consister en un alkoxyde métallique où le métal M peut être partiellement relié à un ou plusieurs ligands tels que par exemple ceux dérivés notamment de β-dicétones, β-cétoesters et esters maloniques (comme par exemple l'acétylacétone) ou de la triéthanolamine.

Comme exemples concrets de constituants **C** qui sont préférés, peuvent être cités : les silicates d'alkyles comme le silicate de méthyle, le silicate d'éthyle, le silicate d'isopropyle, le silicate de n-propyle.

Selon un mode de réalisation préféré, le réticulant **C** est un silicate de formule Si(OR)₄ dans laquelle les substituants R, identiques ou différents, représentent chacun un radical alkyle, linéaire ou ramifié, en C₁ à C₁₂.

Selon un autre mode de réalisation préféré l'alcoxyde métallique **B** est un titanate de formule Ti(OR')₄ dans laquelle les substituants R', identiques ou différents, représentent chacun un radical alkyle, linéaire ou ramifié, en C₂ à C₁₂

Selon un mode particulièrement avantageux, le réticulant est un silicate de formule Si(OR)₄ dans laquelle les substituants R, identiques ou différents, représentent chacun un radical alkyle, linéaire ou ramifié, en C₁ à C₁₂, et l' alcoxyde métallique est un titanate de formule Ti(OR')₄ dans laquelle les substituants. R', identiques ou différents, représentent chacun un radical alkyle, linéaire ou ramifié, en C₂ à C₁₂.

Ce choix judicieux permet d'optimiser les performances d'hydrofugation tout en obtenant un effet perlant remarquable.

L'invention concerne aussi un procédé d'hydrofugation et pour améliorer l'effet perlant de matériaux de construction poreux dans lequel on applique sur le matériau en question une composition selon l'invention telle que définie ci-dessus.

Comme exemple de matériaux poreux on peut citer les substrats suivants : pierre, béton, plâtre, mortier, brique, tuile et bois.

D'autres avantages et caractéristiques de la présente invention apparaîtront à la lecture des exemples suivants donnés à titre illustratif nullement limitatif.

### Exemples :

On prépare différentes formulations avec les constituants suivants :
- résine silicone MDT hydroxylée ayant 0,5 % d'OH en poids et constituée de 62 % en poids de motifs CH₃SiO_{3/2}, 24 % en poids de motifs (CH₃)₂ SiO_{2/2} et 14 % en poids de motifs (CH₃)₃ SiO_{1/2} 100 parties en poids ;
- mélange de :
   - titanate de n-butyle (Bu) de formule Ti(OBu)₄ : **y** parties en poids par rapport à la résine silicone ; et de
   - silicate d'éthyle (Et) de formule Si(OEt)₄ : **z** parties parties en poids par rapport à la résine silicone ;

Les formulations sont ensuite re-diluées dans du solvant (White Spirit) avant application pour obtenir au final des solutions de concentrations de 5% en poids.
○ Traitements :
   ■ Les pierres (ici pierres de Savonnières) sont traitées par trempage dans les solutions pendant une durée de 2 fois 5 secondes.
   ■ On laisse sécher les pierres pendant 15 jours à température ambiante sous une atmosphère à 50% d'humidité relative.
   ■ Deux types de mesures sont effectuées :
      ■ Des mesures d'hydrofugation par reprise d'eau par capillarité : Les échantillons traités sont placés au contact de l'eau puis sont pesés régulièrement. On détermine la diminution d'adsorption d'eau en normalisant la reprise en eau des échantillons par celle d'un témoin non traité.
      ■ Des mesures d'effet perlant : On mesure la performance en soumettant l'échantillon traité à une pluie. L'échantillon est placé à 45° de la verticale et la pluie est obtenue par aspersion d'eau au travers d'un tube percé placé horizontalement à 20cm au dessus de l'échantillon. La quantité d'eau déversée est de 250ml. L'échantillon est pesé avant et après le test et l'effet perlant est obtenu par différence de masse.

### RESULTATS:

Toutes les compositions donnent de bons résultats en hydrofugation (mesure de la reprise en eau par capillarité) similaires.

**Tableau 1.**

| Variation du taux de titanate (y) avec taux de silicate constant (z= 7 % en poids par rapport au poids de la résine silicone) | | |
|---|---|---|
| | % de Titanate (y) | Hydrofugation = diminution de la reprise d'eau par capillarité en 100% (plus le % est élevé, meilleure est l'hydrofugation) |
| Composition1 Comparatif | 3 | 90% |
| Composition 2 Invention | 5 | 90% |
| Composition 3 Invention | 7 | 92% |

**Tableau 2.**

| Variation du taux (z) de silicate avec taux de titanate constant (y = 8% en poids par rapport au poids de la résine silicone) | | |
|---|---|---|
| | % Silicate (z) | Hydrofugation = diminution de la reprise d'eau par capillarité en 100% (plus le % est élevé, meilleure est l'hydrofugation) |
| Composition4 Comparatif | 0 | 87% |
| Composition 5 Comparatif | 2 | 90% |
| Composition 6 Invention | 6 | 90% |

Par contre, en terme d'effet perlant, l'utilisation de concentration selon l'invention de titanate et de silicate permet l'obtention d'effet perlant remarquable.

**Tableau 3.**

| Variation du taux de titanate (y) avec taux de silicate constant (z= 7 % en poids par rapport au poids de la résine silicone) | | |
|---|---|---|
| | % de Titanate (y) | Effet perlant : Quantité d'eau retenue (plus la valeur est faible, meilleur est l'effet perlant) |
| Composition1 Comparatif | 3 | 0,55 |
| Composition 2 Invention | 5 | 0,3 |
| Composition 3 Invention | 7 | 0,1 |

**Tableau 4.**

| Variation du taux (z) de silicate avec taux de titanate constant (y = 8% en poids par rapport au poids de la résine silicone) | | |
|---|---|---|
| | % Silicate (z) | Effet perlant : Quantité d'eau retenue (plus la valeur est faible, meilleur est l'effet perlant) |
| Composition4 Comparatif | 0 | 1 |
| Composition 5 Comparatif | 2 | 0,5 |
| Composition 6 Invention | 6 | 0,1 |

## Revendications

1. Utilisation pour hydrofuger et améliorer l'effet perlant d'un matériau de construction poreux d'une composition liquide silicone constituée essentiellement de :
a) au moins une résine polyorganosiloxane **A** présentant, par molécule, d'une part au moins deux motifs siloxyles différents choisis parmi ceux de types M, D, T, Q, l'un des motifs étant un motif T ou un motif Q et d'autre part au moins trois groupements hydrolysables/condensables de types OH et/ou OR¹ où R¹ est un radical alkyle linéaire ou ramifié en C₁ à C₆ ;
b) au moins un alkoxyde métallique **B** où le métal M peut éventuellement être partiellement relié à un ou plusieurs ligands, en teneur ≥ 5% poids, de préférence ≥ à 6% en poids et encore plus préférentiellement ≥ à 7% en poids par rapport à la résine polyorganosiloxane **A**, ledit alcoxyde métallique ayant pour formule générale :
M[(OCH₂CH₂)ₐ-OR²]ₙ **(I)**
dans laquelle :
- M est un métal choisi dans le groupe formé par : Ti, Zr, Ge, Mn et Al ;
- n = valence de M ;
- les substituants R², identiques ou différents, représentent chacun un radical alkyle, linéaire ou ramifié, en C₁ à C₁₂ ;
- a représente zéro, 1 ou 2 ;
- avec les conditions selon lesquelles, quand le symbole a représente zéro, le radical alkyle R² possède de 2 à 12 atomes de carbone, et quand le symbole a représente 1 ou 2, le radical alkyle R² possède de 1 à 4 atomes de carbone ; et
c) au moins un réticulant **C**, en teneur ≥ 4% en poids, de préférence ≥ à 5% en poids et encore plus préférentiellement ≥ à 6 % en poids par rapport à la résine polyorganosiloxane **A**, ledit réticulant **C** ayant pour formule
Si[(OCH₂CH₂)ₐ-OR]₄ **(II)**
dans laquelle :
les substituants R, identiques ou différents, représentent chacun un radical alkyle, linéaire ou ramifié, en C₁ à C₁₂, et
- a représente zéro, 1 ou 2.

2. Utilisation selon la revendication 1 **caractérisée en ce que** la composition liquide silicone contient en outre un solvant organique utilisable pour l'hydrofugation de matériaux de construction.

3. Utilisation selon l'une des revendications précédentes **caractérisée en ce que** le réticulant est un silicate de formule Si(OR)₄ dans laquelle les substituants R, identiques ou différents, représentent chacun un radical alkyle, linéaire ou ramifié, en C₁ à C₁₂.

4. Utilisation selon l'une des revendications précédentes **caractérisée en ce que** l'alcoxyde métallique est un titanate de formule Ti(OR')₄ dans laquelle les substituants R', identiques ou différents, représentent chacun un radical alkyle, linéaire ou ramifié, en C₂ à C₁₂.

5. Utilisation selon la revendication 1 ou 2 **caractérisée en ce que :**
- l' alcoxyde métallique B est un titanate de formule Ti(OR')₄ dans laquelle les substituants R', identiques ou différents, représentent chacun un radical alkyle, linéaire ou ramifié, en C₂ à C₁₂, et
- le réticulant est un silicate de formule Si(OR)₄ dans laquelle les substituants R, identiques ou différents, représentent chacun un radical alkyle, linéaire ou ramifié, en C₁ à C₁₂.

6. Procédé pour hydrofuger et améliorer l'effet perlant de matériaux de construction poreux dans lequel on applique sur le matériau en question une composition silicone liquide définie selon l'une quelconque des revendications précédentes.

7. Procédé selon la revendication 6 dans lequel on applique la composition sur un matériau qui est choisi parmi les substrats suivants : pierre, béton, mortier, brique, tuile et bois.

## Claims

1. Use, for hydrophobizing and improving the beading effect of a porous construction material, of a liquid silicone composition composed essentially of:
a) at least one polyorganosiloxane resin **A** exhibiting, per molecule, on the one hand, at least two different siloxyl units chosen from those of M, D, T and Q type, one of the units being a T unit or a Q unit, and, on the other hand, at least three hydrolyzable/condensable groups of OH and/or OR¹ type where R¹ is a linear or branched C₁ to C₆ alkyl radical;
b) at least one metal alkoxide **B** where the metal M can optionally be partially connected to one or more ligands, in a content ≥ 5% by weight, preferably ≥ 6% by weight and more preferably still ≥ 7% by weight, with respect to the polyorganosiloxane resin **A**, said metal alkoxide having the general formula:
M[(OCH₂CH₂)ₐ-OR²]ₙ (I)
in which:
- M is a metal chosen from the group formed by: Ti, Zr, Ge, Mn and Al;
- n = valency of M;
- the R² substituents, which are identical or different, each represent a linear or branched C₁ to C₁₂ alkyl radical;
- a represents zero, 1 or 2;
- with the conditions according to which, when the symbol a represents zero, the R² alkyl radical has from 2 to 12 carbon atoms and, when the symbol a represents 1 or 2, the R² alkyl radical has from 1 to 4 carbon atoms; and
c) at least one crosslinking agent **C**, in a content ≥ 4% by weight, preferably ≥ 5% by weight and more preferably still ≥ 6% by weight, with respect to the polyorganosiloxane resin **A**, said crosslinking agent C having the formula
Si[(OCH₂CH₂)ₐ-OR]₄ (II)
in which:
- the R substituents, which are identical or different, each represent a linear or branched C₁ to C₁₂ alkyl radical, and
- a represents zero, 1 or 2.

2. Use according to Claim 1, **characterized in that** the liquid silicone composition additionally comprises an organic solvent which can be used for the hydrophobizing of construction materials.

3. Use according to either of the preceding claims, **characterized in that** the crosslinking agent is a silicate of formula Si(OR)₄ in which the R substituents, which are identical or different, each represent a linear or branched C₁ to C₁₂ alkyl radical.

4. Use according to one of the preceding claims, **characterized in that** the metal alkoxide is a titanate of formula Ti(OR')₄ in which the R' substituents, which are identical or different, each represent a linear or branched C₁ to C₁₂ alkyl radical.

5. Use according to Claim 1 or 2, **characterized in that:**
- the metal alkoxide B is a titanate of formula Ti(OR')₄ in which the R' substituents, which are identical or different, each represent a linear or branched C₁ to C₁₂ alkyl radical, and
- the crosslinking agent is a silicate of formula Si(OR)₄ in which the R substituents, which are identical or different, each represent a linear or branched C₁ to C₁₂ alkyl radical.

6. Process for hydrophobizing and improving the beading effect of porous construction materials in which a liquid silicone composition defined according to any one of the preceding claims is applied to the material in question.

7. Process according to Claim 6, in which the composition is applied to a material which is chosen from the following substrates: stone, concrete, mortar, brick, tile and wood.

## Patentansprüche

1. Verwendung einer flüssigen Silikonzusammensetzung, im wesentlichen bestehend aus:
a) mindestens einem Polyorganosiloxanharz **A**, das pro Molekül zum einen mindestens zwei verschiedene Siloxyleinheiten, ausgewählt unter den Typen M, D, T und Q, wobei es sich bei einer der Einheiten um eine T-Einheit oder Q-Einheit handelt, und zum anderen mindestens drei hydrolysierbare/kondensierbare Gruppen vom OH- und/oder OR¹-Typ, wobei R¹ für einen linearen oder verzweigten C₁- bis C₆-Alkylrest steht, aufweist;
b) mindestens einem Metallalkoxid **B**, wobei das Metall M gegebenenfalls partiell an einen oder mehrere Liganden gebunden sein kann, in einem Gehalt von ≥ 5 Gew.-%, vorzugsweise ≥ 6 Gew.-% und noch weiter bevorzugt ≥ 7 Gew.-%, bezogen auf das Polyorganosiloxanharz **A**, wobei das Metallalkoxid die folgende allgemeine Formel aufweist:
M[(OCH₂CH₂)ₐ-OR²]ₙ **(I)**
worin:
- M für ein Metall aus der Gruppe bestehend aus Ti, Zr, Ge, Mn und Al steht;
- n = Wertigkeit von M;
- die Substituenten R² gleich oder verschieden sind und jeweils für einen linearen oder verzweigten C₁- bis C₁₂-Alkylrest stehen;
- a für null, 1 oder 2 steht;
- mit den Maßgaben, daß der Alkylrest R² 2 bis 12 Kohlenstoffatome aufweist, wenn das Symbol a für null steht, und der Alkylrest R² 1 bis 4 Kohlenstoffatome aufweist, wenn das Symbol a für 1 oder 2 steht; und
c) mindestens einem Vernetzer C in einem Gehalt von ≥ 4 Gew.-%, vorzugsweise ≥ 5 Gew.-% und noch weiter bevorzugt ≥ 6 Gew.-%, bezogen auf das Polyorganosiloxanharz **A**, wobei der Vernetzer **C** die folgende Formel aufweist:
Si[(OCH₂CH₂)ₐ-OR]₄ **(II)**
worin:
- die Substituenten R gleich oder verschieden sind und jeweils für einen linearen oder verzweigten C₁- bis C₁₂-Alkylrest stehen und
- a für null, 1 oder 2 steht;
zur Hydrophobierung und Verbesserung des Abperleffekts eines porösen Baumaterials.

2. Verwendung nach Anspruch 1, **dadurch gekennzeichnet, daß** die flüssige Silikonzusammensetzung außerdem ein organisches Lösungsmittel, das zur Hydrophobierung von Baumaterialien verwendet werden kann, enthält.

3. Verwendung nach einem der vorhergehenden Ansprüche, **dadurch gekennzeichnet, daß** es sich bei dem Vernetzer um ein Silicat der Formel Si(OR)₄, worin die Substituenten R gleich oder verschieden sind und jeweils für einen linearen oder verzweigten C₁- bis C₁₂-Alkylrest stehen, handelt.

4. Verwendung nach einem der vorhergehenden Ansprüche, **dadurch gekennzeichnet, daß** es sich bei dem Metallalkoxid um ein Titanat der Formel Ti(OR')₄, worin die Substituenten R' gleich oder verschieden sind und jeweils für einen linearen oder verzweigten C₂- bis C₁₂-Alkylrest stehen, handelt.

5. Verwendung nach Anspruch 1 oder 2, **dadurch gekennzeichnet, daß:**
- es sich bei dem Metallalkoxid B um ein Titanat der Formel Ti(OR')₄, worin die Substituenten R' gleich oder verschieden sind und jeweils für einen linearen oder verzweigten C₂- bis C₁₂-Alkylrest stehen, handelt und
- es sich bei dem Vernetzer um ein Silicat der Formel Si(OR)₄, worin die Substituenten R gleich oder verschieden sind und jeweils für einen linearen oder verzweigten C₁- bis C₁₂-Alkylrest stehen, handelt.

6. Verfahren zur Hydrophobierung und Verbesserung des Abperleffekts von porösen Baumaterialien, bei dem man auf das betreffende Material eine flüssige Silikonzusammensetzung gemäß einem der vorhergehenden Ansprüche aufbringt.

7. Verfahren nach Anspruch 6, bei dem man die Zusammensetzung auf ein unter den folgenden Substraten ausgewähltes Material aufbringt: Stein, Beton, Mörtel, Ziegelstein, Dachziegel und Holz.
